# EUROPÄISCHE PATENTSCHRIFT

(11) **EP 2 240 267 B1**
(45) Veröffentlichungstag und Bekanntmachung des Hinweises auf die Patenterteilung: **28.09.2016**
(21) Anmeldenummer: 09709140.9
(22) Anmeldetag: 04.02.2009
(51) Int. Cl.: B01J 13/00

(54) **MIKROKAPSELN UMFASSEND LIPOPHILES TENSID UND ÖL**
MICROCAPSULES CONTAINING LIPOPHILIC TENSIDE AND OIL
MICROCAPSULES COMPRENANT UN AGENT TENSIOACTIF LIPOPHILE ET DE L'HUILE

(30) Priorität: 05.02.2008 EP 08101289
(43) Veröffentlichungstag der Anmeldung: 20.10.2010
(73) Patentinhaber: BASF SE, 67056 Ludwigshafen am Rhein (DE)
(72) Erfinder: LEVY, Tatjana, 68165 Mannheim (DE); JUNG, Marc Rudolf, 67551 Worms (DE); BERGHAUS, Rainer, 67346 Speyer (DE); HENTZE, Hans-Peter, FI-02160 Espoo (FI); KOPLIN, Tobias Joachim, 67063 Ludwigshafen (DE); MONTAG, Jurith, 67117 Limburgerhof (DE); REINOLD, Anke, 68165 Mannheim (DE); SOWA, Christian, 67435 Neustadt (DE)
(74) Vertreter: BASF IP Association
(86) Internationale Anmeldenummer: PCT/EP2009/051272
(87) Internationale Veröffentlichungsnummer: WO 2009/098232

(56) Entgegenhaltungen:
- WO-A-03/099005
- WO-A-2004/017733
- WO-A-2005/084435
- DE-A1- 10 058 878
- US-A1- 2003 119 675

## Beschreibung

Gegenstand der vorliegenden Erfindung ist eine wässerige Dispersion umfassend Mikrokapseln, deren Kapselwand aus radikalisch polymerisierten Monomeren aufgebaut ist, und deren Kapselkern mindestens ein Öl umfasst, dadurch gekennzeichnet, dass der Kapselkern mindestens ein lipophiles Tensid und die kontinuierliche Phase mindestens eine Agrochemikalie umfasst, und wobei die radikalisch polymerisierten Monomere Acrylsäure und ihre Ester, Methacrylsäure und ihre Ester, Maleinsäure und ihre Ester, Styrol, Butadien, Isopren, Vinylacetat oder Vinylpropionat sind. Daneben betrifft ein Gegenstand ein Verfahren zur Herstellung der wässerigen Dispersion indem man eine Mikrokapsel-Rohdispersion umfassend die Mikrokapseln bereitstellt, und mit einer Agrochemikalie versetzt. Ein weiterer Gegenstand ist die Verwendung der Mikrokapsel-Rohdispersion zur Herstellung der erfindungsgemäßen wässerigen Dispersion. Schließlich betrifft ein anderer Gegenstand ein Verfahren zur Bekämpfung unerwünschten Pflanzenwuchses und /oder zur Bekämpfung von unerwünschtem Insekten- oder Milbenbefall auf Pflanzen und/oder zur Bekämpfung von phytopathogenen Pilzen, indem man Saatgüter von Nutzpflanzen mit der wäßrigen Dispersion behandelt. Ein weiterer Gegenstand ist ein Verfahren zur Bekämpfung unerwünschten Pflanzenwuchses und/oder zur Bekämpfung von unerwünschtem Insekten- oder Milbenbefall auf Pflanzen und/oder zur Bekämpfung von phytopathogenen Pilzen, indem man die Pilze/Insekten, deren Lebensraum, oder die vor Pilz- oder Insektenbefall zu schützenden Pflanzen, oder Böden bzw. die unerwünschten Pflanzen, den Boden auf denen die unerwünschten Pflanzen wachsen, oder deren Saatgüter mit der wässrigen Dispersion behandelt.

Kombinationen bevorzugter Merkmale mit anderen bevorzugten Merkmalen werden von der vorliegenden Erfindung umfasst.

Mikrokapseln sind für verschiedene industrielle Anwendungszwecke in verschiedenen Ausführungsformen beschrieben worden. Es sind Mikrokapseln auf Gelatine-, Polyurethan-Harz-, Melamin-Formaldehyd-Harz- sowie Polyacrylatbasis bekannt. Speziell Mikrokapseln auf Polyacrylatbasis sind dem Fachmann als besonders stabile Ausführungsform bekannt. Beispielsweise dienen Polyacrylat-haltige Mikrokapseln dem Schutz von Kernmaterialien, die erst durch gezielte mechanische Zerstörung der Kapselhülle freigesetzt werden sollen, beispielsweise von Farbstoffen für Durchschreibepapiere. Ein weiteres kommerzielles Beispiel sind Polyacrylat-haltige Mikrokapseln zum Schutz von Kernmaterialien, die mehrere Jahrzehnte eingekapselt bleiben sollen, wie mikroverkapselte Latentwärmespeichermaterialen für Beton oder Gipskartonplatten.

EP 0 457 154 betrifft Mikrokapseln, die erhältlich sind durch Polymerisation von Acrylmonomeren. Als Inhaltsstoffe kommen neben Farbbildnern für Durchschreibepapiere,

Parfümen, Klebstoffen, landwirtschaftlichen Chemikalien, Nahrungsmitteln, Flüssigkristallen, Katalysatoren auch Detergentien und Öle in Betracht.

WO 03/099005 betrifft Mikrokapsel-Formulierungen, die neben einer wässerigen Suspension von einem festen agrochemischen Wirkstoff auch Mikrokapseln enthalten, die eine Hülle aus Polyharnstoff und/oder Polyurethan und als Kapselfüllung mindestens einen Penetrationsförderer enthalten. Als Penetrationsförderer kommen u.a. Öle und Alkanol-Alkoxylate in Betracht.

WO 04/017734 betrifft wässerige Dispersionen von mikroverkapselten Agrochemikalien. Die Kapseln umfassen eine Agrochemikalie, ein wasserunlösliches Adjuvans mit wenig oder keiner oberflächenaktiven Wirkung und ein wasserunlösliches Lösungsmittel. Der Kapselinhalt wird beim Trocknen der Formulierung freigesetzt.
DE 102007055813 betrifft Mikrokapseln, die erhältlich sind durch Polymerisation von Acrylmonomeren. Als Kapselkern kommen lipophile Substanzen in Betracht.

US 2003/0119675 A1 betrifft eine wässrige Mikrokapsel Suspension, deren Hülle ein Reaktionsprodukt von einem Isocyanat mit einem Di- oder Polyamin ist, und die gefüllt sind mit einem agrochemischen Wirkstoff, einem Kohlenwasserstoff und einem Tensid.

DE 100 58 878 A1 betrifft eine wässrige Mikrokapsel Suspension, deren Hülle ein Reaktionsprodukt von einem Isocyanat mit einem Di- oder Polyamin ist, un die gefüllt sind mit einem agrochemischen Wirkstoff, einem Kohlenwasserstoff und einem Tensid.

Mikrokapseln umfassend Polyurethane sind nachteilig gegenüber Mikrokapseln mit radikalisch polymerisierten Monomeren, da als Monomere für Polyurethane giftige Isocyanate eingesetzt werden, die mit hohem Sicherheitsaufwand gehandhabt werden müssen. Weiterhin sind Isocyanate hochreaktiv gegenüber H-aciden Gruppen, wie Alkohole und Aminen, so dass während der Polyaddition nur ausgewählte Additive, Tenside oder Öle anwesend sein können. Zudem muß zur Dispergierung einiger Tensiden oder Öle eine höhere Temperatur verwendet werden, so dass die Reaktivität der Isocyanate noch erhöht wird.

Eine Aufgabe der vorliegenden Erfindung war es, eine Möglichkeit zu finden, die Stabilität von Suspensionskonzentraten, welche durch Adjuvantien herabgesetzt werden kann, zu erhöhen.
Eine weitere Aufgabe war, wässerige Dispersionen von Mikrokapseln für agrochemische Verwendung bereitzustellen, die penetrationsfördernde Verbindungen wie Öl oder lipophiles Tensid enthalten und wieder freisetzen können.
Des Weiteren war es eine Aufgabe, Suspensionskonzentrate von Pflanzenschutzmitteln umfassend penetrationsfördernde Verbindungen wie Öl oder lipophiles Tensid bereitzustellen, in denen die Kristallisation der Wirkstoffkristalle vermindert ist.

Eine zusätzliche Aufgabe war, Suspensionskonzentrate von Pflanzenschutzmitteln bereitzustellen, die eine erhöhte biologische Wirksamkeit im Vergleich zu herkömmlichen Suspensionskonzentraten ohne zugesetztes Adjuvans zeigten.
Eine weitere Aufgabe war es, wässerige Dispersionen von Mikrokapseln für agrochemische Verwendung bereitzustellen, die ohne Isocyanate hergestellt werden können.

Die Aufgabe wurde gelöst durch eine wässerige Dispersion umfassend Mikrokapseln, deren Kapselwand aus radikalisch polymerisierten Monomeren aufgebaut ist und deren Kapselkern mindestens ein Öl umfasst, dadurch gekennzeichnet, dass der Kapselkern mindestens ein lipophiles Tensid und die kontinuierliche Phase der Dispersion mindestens eine Agrochemikalie umfasst, und wobei die radikalisch polymerisierten Monomere Acrylsäure und ihre Ester, Methacrylsäure und ihre Ester, Maleinsäure und ihre Ester, Styrol, Butadien, Isopren, Vinylacetat oder Vinylpropionat sind.

Unter wässeriger Dispersion wird in der vorliegenden Anmeldung ein System aus mehreren Phasen verstanden, von denen die kontinuierliche Phase wässerig ist und mindestens eine weitere Phase fein verteilt ist. Die kontinuierliche Phase der wässerigen Dispersion umfasst erfindungsgemäß mindestens eine Agrochemikalie. Die Agrochemikalie kann dabei in fester, flüssiger, oder fester und flüssiger Form in der kontinuierlichen Phase bei 25 °C vorliegen. Bevorzugt umfasst die kontinuierliche Phase der Dispersion bei 25 °C mindestens eine Agrochemikalie in Form suspendierter (d.h. fester) Partikel.

Eine Mikrokapsel der erfindungsgemäßen wässerigen Dispersion umfasst eine Kapselwand und einen Kapselkern. Erfindungsgemäß soll auch eine Mikrokapsel verstanden werden, die mindestens eine Kapselwand und mindestens einen Kapselkern umfasst. So kann eine Mikrokapsel zum Beispiel einen Kapselkern und zwei Kapselwände aufweisen. Ebenso kann eine Mikrokapsel zum Beispiel mehrere Kapselkerne, zum Beispiel zwei nebeneinander oder zwei ineinander liegende Kapselkerne, und eine Kapselwand, zum Beispiel zwei nebeneinander oder ineinander liegende Kapselwände, aufweisen. Bevorzugt umfasst eine Mikrokapsel eine Kapselwand und einen Kapselkern.

Das erfindungsgemäße Verfahren führt in der Regel zu gleich oder ähnlich aufgebauten Mikrokapseln. Da das erfindungsgemäße Verfahren ein Ensemble von Mikrokapseln herstellt, können einzelne wenige Mikrokapseln in ihrem Aufbau abweichen und beispielsweise keinen Kapselkern enthalten. Bevorzugt enthalten im Wesentlichen alle, insbesondere alle Mikrokapseln eine Kapselwand und einen Kapselkern.

Die mittlere Teilchengröße der Kapseln (Z-Mittel mittels Lichtstreuung) beträgt 0,5 bis 100 µm, bevorzugt 0,8 bis 50 µm und insbesondere 1 bis 20 µm.

Das Gewichtsverhältnis von Kapselkern zu Kapselwand beträgt im Allgemeinen von 50 : 50 bis 99 : 1. Bevorzugt wird ein Kern : Wand-Verhältnis von 70 : 30 bis 98 : 2, insbesondere von 80 : 20 bis 95 : 5. Das Gewichtsverhältnis von Kapselkern zu Kapselwand berechnet sich aus dem Verhältnis der Summe Öl und lipophiles Tensid zur Summe der Monomeren.
Die Kapselwand ist aus radikalisch polymerisierten Monomeren aufgebaut. Der Fachmann unterscheidet üblicherweise radikalisch polymerisierte Monomere beispielsweise von Monomeren, die durch Polykondensation zu Polyestern oder Polyaddition zu Polyurethanen polymerisiert wurden. Radikalisch polymerisierte Monomere sind Acrylsäure und ihre Ester, Methacrylsäure und ihre Ester, Maleinsäure und ihre Ester, Styrol, Butadien, Isopren, Vinylacetat, Vinylpropionat. Besonders bevorzugt sind Alkylacrylat, Alkylmethacrylat, Acrylsäure, Methacrylsäure, 1,4-Butandioldiacrylat, Pentaerithrit-Tetraacrylat, Pentaerithrit-Triacrylat, Trimethylolpropantriacrylat.

In einer bevorzugten Ausführungsform ist die Kapselwand aufgebaut aus
30 bis 100 Gew.% von einem oder mehreren Monomeren, die C₁-C₂₄-Alkylester der Acrylsäure, C₁-C₂₄-Alkylester der Methacrylsäure, Acrylsäure, Methacrylsäure und Maleinsäure sind (Monomer I),
0 bis 20 Gew.% von einem oder mehreren bi- und/oder polyfunktionellen Monomeren (Monomere II), welche in Wasser nicht löslich oder schwer löslich sind und
0 bis 50 Gew.% von einem oder mehreren sonstigen Monomeren (Monomere III),
jeweils bezogen auf das Gesamtgewicht der Monomere.

Die Polymere der Kapselwand enthalten im Allgemeinen mindestens 30 Gew.-%, in bevorzugter Form mindestens 40 Gew.-%, in besonders bevorzugter Form mindestens 50 Gew.-%, insbesondere mindestens 60 Gew.-%, ganz besonders bevorzugt mindestens 65 Gew.-% sowie bis zu 100 Gew.-% eines oder mehrerer Monomeren I einpolymerisiert, bezogen auf das Gesamtgewicht der Monomere.

Außerdem können die Polymere der Kapselwand im Allgemeinen bis zu 20 Gew.-%, vorzugsweise höchstens 15 Gew.-% und in besonders bevorzugter Form höchstens 10 Gew.-% mindestens eines Monomeren II einpolymerisiert enthalten. In einer bevorzugten Ausführungsform können die Polymere der Kapselwand kein Monomer II einpolymerisiert enthalten. In einer weiteren bevorzugten Ausführungsform können die die Polymere der Kapselwand 0,1 bis 20 Gew.-%, bevorzugt 0,5 bis 10 Gew.% Monomere II einpolymerisiert enthalten.

Daneben können die Polymere der Kapselwand bis zu 50 Gew.-%, vorzugsweise bis zu 40 Gew.-%, insbesondere bis zu 20 Gew.-% mindestens eines sonstigen Monomere III einpolymerisiert enthalten. In einer bevorzugten Ausführungsform können die Polymere der Kapselwand kein Monomer III einpolymerisiert enthalten. In einer weiteren bevorzugten Ausführungsform können die Polymere der Kapselwand 1 bis 50 Gew.-%, bevorzugt 5 bis 40 Gew.% Monomere III einpolymerisiert enthalten.

In einer bevorzugten Ausführungsform ist die Kapselwand aus den Monomeren der Gruppe I, II und III aufgebaut. In einer weiteren bevorzugten Ausführungsform ist die Kapselwand aus den Monomeren der Gruppe I und I aufgebaut. In einer weiteren bevorzugten Ausführungsform ist die Kapselwand aus den Monomeren der Gruppe I und III aufgebaut. In einer weiteren bevorzugten Ausführungsform ist die Kapselwand aus den Monomeren der Gruppe I aufgebaut.

Als Monomere I eignen sich die C₁-C₂₄-Alkylester der Acryl- und/oder Methacrylsäure . Weiterhin eignen sich die ungesättigten C₃- und C₄-Carbonsäuren wie Acrylsäure, Methacrylsäure sowie Maleinsäure. Beispielhaft seien Methyl-, Ethyl-, n-Propyl-, iso-Propyl-, n-Butyl-, iso-Butyl-, sec.-Butyl- und tert.-Butylacrylat sowie Methyl-, Ethyl-, n-Propyl-, iso-Propyl-, n-Butyl-, iso-Butyl-, sec.-Butyl- und tert.-Butylmethacrylat genannt. Bevorzugt sind Alkylacrylat, Alkylmethacrylat, Acrylsäure, Methacrylsäure.

Geeignete Monomere I sind bi- oder polyfunktionelle Monomere, welche in Wasser nicht löslich oder schwer löslich sind. Bevorzugt haben Monomere I aber eine gute bis begrenzte Löslichkeit in der lipophilen Substanz. Unter Schwerlöslichkeit ist eine Löslichkeit kleiner 60 g/l in Wasser bei 20 °C zu verstehen. Unter bi- oder polyfunktionellen Monomeren versteht man Verbindungen, die wenigstens zwei nichtkonjugierte ethylenische Doppelbindungen haben. Vornehmlich kommen Divinyl- und Polyvinylmonomere in Betracht, die eine Vernetzung der Kapselwand während der Polymerisation bewirken.

Bevorzugte Divinylmonomere sind die Diester von Diolen mit Acrylsäure oder Methacrylsäure. Beispielhaft seien Ethandioldiacrylat, Ethylenglykoldimethacrylat, 1,3-Butylenglykoldimethacrylat, Allylacrylat und Allylmethacrylat genannt. Besonders bevorzugt sind Propandiol-, Butandiol-, Pentandiol- und Hexandioldiacrylat und die entsprechenden Methacrylate.

Bevorzugte Polyvinylmonomere sind die Polyester von Polyolen mit Acrylsäure und/oder Methacrylsäure. Bevorzugt werden Trimethylolpropantriacrylat und -methacrylat, Pentaerythrittriacrylat und Pentaerythrittetraacrylat bzw. die entsprechenden Methacrylate sowie ihre technischen Mischungen.

Als sonstige Monomere III kommen von den Monomeren I verschiedene monoethylenisch ungesättigte Monomere in Betracht. Bevorzugt sind Monomere IIIa wie Vinylacetat, und Vinylpropionat, Styrol. In einer weiteren bevorzugten Ausführungsform kommen die wasserlöslichen Monomere IIIb in Betracht, z.B. 2-Hydroxyethylacrylat und -methacrylat. Daneben sind insbesondere Dimethylaminoethylmethacrylat und Diethylaminoethylmethacrylat zu nennen.

Der Kapselkern umfasst mindestens ein lipophiles Tensid und mindestens ein Öl.

Als Tenside werden amphiphile Verbindungen verstanden, mit mindestens einem hydrophoben und einem hydrophilen Molekülteil. Tenside haben die Eigenschaft, die Grenzflächenspannung zwischen zwei Phasen zu reduzieren.

Als erfindungsgemäße lipophile Tenside kommen Tenside in Betracht, die sich im Öl bzw. der Mischung von Ölen, die im Kapselkern vorhanden sind, bei 20 °C zu mindestens 90 Gew.%, bevorzugt zu mindestens 95 Gew.% und insbesondere zu mindestens 99 Gew.% lösen. In einer bevorzugten Ausführungsform kommen Tenside in Betracht, die sich im Öl bzw. der Mischung von Ölen, die im Kapselkern vorhanden sind, bei 60 °C zu mindestens 70 Gew.%, bevorzugt zu mindestens 80 Gew.% und insbesondere zu mindestens 90 Gew.% lösen. Die Öllöslichkeit des Tensids wird bei einem Gewichtsverhältnis von lipophilem Tensid zu Öl bestimmt, das dem Gewichtsverhältnis im Kapselkern entspricht.

Bevorzugte lipophile Tenside sind nichtionische Tenside, wie Alkanolalkoxylate, Alkylphenolpolyglycolether, ethoxylierte Sorbitanfettsäureester, Alkylpolyglucoside, Fettsäureglucamide, Fettsäurepolyglycolester, Fettalkohole, Fettaminalkoxylate, Fettsäureamidalkoxylate, Polyglycerolfettsäureester, Fettsäurealkanolamide oder Ethylenoxid-Propylenoxid Blockpolymere.

Bevorzugte nichtionische Tenside sind Alkanolalkoxylate und Ethylenoxid-Propylenoxid Blockpolymere, insbesondere Alkanolalkoxylate. Weiterhin sind Mischungen der oben genannten lipophilen Tenside bevorzugt.

Bevorzugte Alkanolalkoxylate sind solche der Formel (I)

Rₐ-O-(AO)ₘ-R¹ Formel (I)

in welcher
Ra für geradkettiges oder verzweigtes Alkyl oder Alkylen mit 4 bis 32, bevorzugt 10 bis 22 Kohlenstoffatomen steht,
AO für einen Ethylenoxid-Rest, Propylenoxid-Rest, Butylenoxid-Rest, Pentylenoxid-Rest, Styroloxid-Rest oder für Gemische aus vorgenannten Resten steht in statistischer oder Block-Reihenfolge,
m für Zahlen von 1 bis 30 steht und
R¹ für Wasserstoff oder Alkyl mit 1 bis 4 Kohlenstoffatomen steht.

Besonders bevorzugte Alkanolalkoxylate sind solche der Formel (II)

R^{b}-O-(EO)ₚ-(PO)_{q}-R¹ Formel (II)

in welcher
R^{b} für geradkettiges oder verzweigtes Alkyl oder Alkylen mit 4 bis 32, bevorzugt 10 bis 22, besonders bevorzugt 6 bis 18 Kohlenstoffatomen steht,
EO für -CH₂CH₂-O- steht,
PO für -CH₂-CH(CH₃)-O- oder -(CH₂)₃-O steht,
p für Zahlen von 0 bis 20, bevorzugt 3 bis 10 steht, insbesondere 4 bis 8
q für Zahlen von 1 bis 25, bevorzugt 4 bis 15 steht, und
R¹ für Wasserstoff oder Alkyl mit 1 bis 4 Kohlenstoffatomen steht,
wobei die EO und PO Einheiten in statistischer Reihenfolge oder als Blöcke auftreten können.

In einer weiteren Ausführungsform steht bei dem Alkanolalkoxylat der Formel (II)
R^{b} für geradkettiges oder verzweigtes Alkyl oder Alkylen mit 4 bis 32, bevorzugt 6 bis 22, besonders bevorzugt 10 bis 18 Kohlenstoffatomen,
q für Zahlen von 1 bis 25, bevorzugt 3 bis 15,
und die anderen Reste wie vorstehend für die Formel (II) beschrieben.

Eine weitere besonders bevorzugte Ausführungsform sind Alkanolalkoxylate der Formel (III)

R^{c}-O-(EO)ₚ-(BO)_{q}R¹ Formel (III)

in welcher
R^{c} für geradkettiges oder verzweigtes Alkyl oder Alkylen mit 4 bis 32, bevorzugt 7 bis 18 Kohlenstoffatomen steht,
EO für -CH₂CH₂-O- steht,
BO für -C₄H₈O- steht, welches linear oder verzweigt sein kann,
p für Zahlen von 1 bis 25, bevorzugt 3 bis 12 steht, insbesondere 4 bis 7
q für Zahlen von 1 bis 25, bevorzugt 1 bis 15, insbesondere 1 bis 7 steht, und R¹ für Wasserstoff oder Alkyl mit 1 bis 4 Kohlenstoffatomen steht,
wobei die EO und BO Einheiten in statistischer Reihenfolge oder als Blöcke auftreten können.

Eine weitere besonders bevorzugte Ausführungsform sind Alkanolalkoxylate der Formel (IV)

R^{d}-O-(EO)ₚ-R¹ Formel (IV)

in welcher
R^{d} für geradkettiges oder verzweigtes Alkyl oder Alkylen mit 4 bis 32, bevorzugt mit 10 bis 15 Kohlenstoffatomen steht,
EO für -CH₂CH₂-O- steht,
p für Zahlen von 1 bis 10, bevorzugt 1 bis 3 steht,
R¹ für Wasserstoff oder Alkyl mit 1 bis 4 Kohlenstoffatomen steht.

Als Öle eignen sich beispielweise Aliphaten, Aromaten, Wachse, Pflanzenöle, Ester von Pflanzenölen, Siliconöle, aliphatische C6-C18 Alkohole, Fettsäureester mit 8 bis 40 Kohlenstoffatomen im Säureteil und 1 bis 20 Kohlenstoffatomen im Alkoholteil, bevorzugt Ethylhexyllaurat, oder Dialkylester der Formel (V)

R²-O(O)R³(O)O-R⁴ Formel (V)

in welcher
R², R⁴ unabhängig voneinander für ein Alkyl oder Alkylen mit 1 bis 32, bevorzugt 2 bis 26, speziell 4 bis 22 Kohlenstoffatomen steht,
O(O)R³(O)O für ein Dicarboxyrest steht, wobei R³ mindestens 3, bevorzugt 4 bis 8 Kohlenstoffatome umfasst. Bevorzugte Dialkylester sind Bernsteinsäuredibutylester, Adipinsäuredibutylester und Phthalsäuredibutylester. Auch Mischungen vorgenannter Öle sind geeignet.

Beispiele für Pflanzenöle und Ester von Pflanzenölen sind Rapsöl, Sojaöl, Palmöl, Sonnenblumenöl, Maiskernöl, Leinsamenöl, Rüböl, Olivenöl, Baumwollsaatöl, Rapsölmethylester, Rapsölethylester, sowie Gemische von Pflanzenölen, von Estern von Pflanzenölen oder von beidem.

Beispiele für Aromaten sind Benzol, Toluol, Xylol, Naphthalin, Biphenyl, o- oder m-Terphenyl, ein- oder mehrfach C₁-C₂₀-alkylsubstituierte aromatische Kohlenwasserstoffe wie Dodecylbenzol, Tetradecylbenzol, Hexadecylbenzol, Methylnaphthalin, Diisopropylnaphthalin, Hexylnaphthalin oder Decylnaphthalin. Geeignet sind auch technische Aromatengemische im Siedebereich von 30 bis 250 °C sowie Gemische der vorgenannten Aromaten. Bevorzugte Aromaten sind technische Aromatengemische im Siedebereich von 30 bis 250 °C.

Beispiele für Aliphaten sind gesättigte oder ungesättigte C₁₀-C₄₀-Kohlenwasserstoffe, die verzweigt oder bevorzugt linear sind, z. B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan, cyclische Kohlenwasserstoffe, z.B. Cyclohexan, Cyclooctan, Cyclodecan, Mineralöle umfassend gesättigte Kohlenwasserstoffe, oder hochdruckhydriertes Mineralöl (sogenannte Weißöle). Geeignet sind auch Gemische der vorgenannten Aliphaten. Bevorzugte Aliphaten sind Mineralöle.

Beispiele für Wachse sind natürliche und synthetische Wachse, wie Montansäurewachse, Montanesterwachse, Carnaubawachs, Polyethylenwachs, oxidierte Wachse, Polyvinyletherwachse, Ethylenvinylacetatwachs und Gemische der vorgenannten Wachse. Bevorzugt werden niedrigschmelzende Wachse, insbesondere solche, die bei 30 bis 100 °C, insbesondere bei 35 bis 70 °C flüssig sind.

Beispiele für aliphatische C₆-C₁₈ Alkohole sind verzweigte oder lineare C₆-C₁₈ Alkohole, bevorzugt C₈-C₁₄ Alkohole, mit primärer, sekundärer oder tertiärer Hydroxygruppe. Die Wasserlöslichkeit des aliphatische C₆-C₁₈ Alkohols liegt bevorzugt bei unter 10 g/L bei 20 °C. Geeignete Beispiele für aliphatische C₆-C₁₈ Alkohole sind n-Decanol, n-Undecanol, n-Dodecanol. Bevorzugt wird Dodecanol.

Bevorzugte Öle sind Aromaten, Aliphaten, Pflanzenöle und Ester von Pflanzenölen, jeweils einzeln oder in Mischung. Besonders bevorzugte Öle sind Pflanzenöle und Aliphaten, jeweils einzeln oder in Mischung.

Im Allgemeinen liegt das Öl im Kapselkern in flüssiger und/oder fester Form in Abhängigkeit von Schmelzpunkt und der Umgebungstemperatur. Bei einer Umbegungstempertur von 20 °C liegt das Öl bevorzugt in flüssiger Form im Kapselkern vor.

Bevorzugt werden solche Kombinationen von lipophilem Tensid und Öl, die penetrationsfördernde Wirkung aufweisen.

Als Kombinationen mit penetrationsfördernder Wirkung kommen im vorliegenden Zusammenhang alle diejenigen Substanzen in Betracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die in der Literatur (Baur et al., 1997, Pesticide Science 51, 131-152) beschriebene Methode der "unilateral desorption" kann zur Bestimmung dieser Eigenschaft eingesetzt werden. Eine weitere geeignete Methode besteht darin, dass ein einzelner Tropfen der zu untersuchenden Mischung auf ein Blatt gegeben, und der Rückstand auf dem Blatt nach mehreren Tagen bestimmt wird.

Bevorzugte Kombinationen von lipophilem Tensid und Öl mit penetrationsfördernder Wirkung sind beispielsweise Kombinationen aus jeweils mindestens einem nichtionischen Tensid mit jeweils mindestens einem Aromaten, und/oder Aliphaten, und/oder Pflanzenöl, und/oder Ester von Pflanzenölen, und/oder Siliconöle und/oder Wachs. In einer weiteren Ausführungsform ist die Kombination aus jeweils mindestens einem nichtionischen Tensid mit jeweils mindestens einem Aromaten, und/oder Aliphaten, und/oder Pflanzenöl, und/oder Ester von Pflanzenölen, und/oder Siliconöle, und/oder Wachs, und/oder aliphatischem C6-C18 Alkohol bevorzugt.

Besonders bevorzugt sind Kombinationen von Alkanolalkoxylaten und Aromaten, Alkanolalkoxylaten und Aliphaten, Alkanolalkoxylaten und Pflanzenölen, Alkanolalkoxylaten und Estern von Pflanzenölen sowie von Alkanolalkoxylaten und Wachsen. In einer weiteren Ausführungsform ist die Kombination von Alkanolalkoxylaten und aliphatischem C6-C18 Alkohol besonders bevorzugt.

Ganz besonders bevorzugt sind Kombinationen von mindestens einem Alkanolalkoxylat der Formel (II) mit mindestens einem Aromaten, mindestens einem Alkanolalkoxylat der Formel (II) mit mindestens einem Aliphaten, mindestens einem Alkanolalkoxylat der Formel (II) mit mindestens einem Pflanzenöl, sowie mindestens einem Alkanolalkoxylat der Formel (II) mit mindestens einem Ester von Pflanzenöl.
In einer weiteren Ausführungform ist ganz besonders bevorzugt die Kombinationen von mindestens einem Alkanolalkoxylat der Formel (II) mit mindestens einem aliphatischem C6-C18 Alkohol.

Nach einer besonders bevorzugten Ausführungsform werden als lipohile Tenside mindestens ein Alkanolalkoxylat der Formel II und als Öl mindestens ein Pflanzenöl oder mindestens ein Mineralöl eingesetzt. In einer weiteren besonders bevorzugten Ausführungsform werden als lipohile Tenside mindestens ein Alkanolalkoxylat der Formel II und als Öl mindestens ein Pflanzenöl oder mindestens ein aliphatischer C6-C18 Alkohol eingesetzt.

Der Kapselkern umfasst in der Regel mehr als 10 Gew.%, bevorzugt mehr als 15 Gew.%, insbesondere mehr als 20 Gew.% und ganz besonders mehr als 25 Gew.% mindestens eines lipophilen Tensids und weniger als 90 Gew.%, bevorzugt weniger als 85 Gew.%, insbesondere weniger als 80 Gew.% und ganz besonders weniger als 75 Gew.% mindestens eines Öls, jeweils bezogen auf den Kapselkern.

In einer weiteren Ausführungsform umfasst der Kapselkern mehr als 10 bis 90 Gew.%, bevorzugt von 15 bis 85 Gew.%, insbesondere von 20 bis 80 Gew.% und ganz besonders von 25 bis 75 Gew.% mindestens eines lipophilen Tensids und mehr als 10 bis 90 Gew.%, bevorzugt von 15 bis 85 Gew.%, insbesondere von 20 bis 80 Gew.% und ganz besonders von 25 bis 75 Gew.% mindestens eines Öls, jeweils bezogen auf den Kapselkern.

Bevorzugte Kombinationen von lipophilem Tensid und Öl in Mengen mit penetrationsfördernder Wirkung sind beispielsweise mehr als 10 Gew.% mindestens eines nichtionischen Tensides und weniger als 90 Gew.% mindestens eines Aromaten, mehr als 10 Gew.% mindestens eines nichtionischen Tensides und weniger als 90 Gew.% mindestens eines Aliphaten, mehr als 10 Gew.% mindestens eines nichtionischen Tensides und weniger als 90 Gew.% mindestens eines Pflanzenöls, mehr als 10 Gew.% mindestens eines nichtionischen Tensides und weniger als 90 Gew.% mindestens eines Esters von Pflanzenölen sowie mehr als 10 Gew.% mindestens eines nichtionischen Tensides und weniger als 90 Gew.% mindestens eines Wachses, jeweils bezogen auf den Kapselkern. In einer weiteren Ausführungform sind bevorzugte Kombinationen von lipophilem Tensid und Öl in Mengen mit penetrationsfördernder Wirkung beispielsweise mehr als 10 Gew.% mindestens eines nichtionischen Tensides und weniger als 90 Gew.% mindestens eines aliphatischem C6-C18 Alkohols.

Besonders bevorzugt sind Kombinationen in Mengen von mehr als 10 Gew.% mindestens eines Alkanolalkoxylates und weniger als 90 Gew.% mindestens eines Aromaten, mehr als 10 Gew.% mindestens eines Alkanolalkoxylates und weniger als 90 Gew.% mindestens eines Aliphaten, mehr als 10 Gew.% mindestens eines Alkanolalkoxylates und weniger als 90 Gew.% mindestens eines Pflanzenöls, mehr als 10 Gew.% mindestens eines Alkanolalkoxylates und weniger als 90 Gew.% mindestens eines Ester von Pflanzenölen sowie mehr als 10 Gew.% mindestens eines Alkanolalkoxylates und weniger als 90 Gew.% mindestens eines Wachses. Eine weitere besonders bevorzugte Ausführungsform sind Kombinationen in Mengen von mehr als 10 Gew.% mindestens eines Alkanolalkoxylates und weniger als 90 Gew.% mindestens eines aliphatischen C6-C18 Alkohols.

Ganz besonders bevorzugt sind Kombinationen in Mengen von mehr als 10 Gew.% mindestens eines Alkanolalkoxylates der Formel (II) mit weniger als 90 Gew.% mindestens eines Aromaten, mehr als 10 Gew.% mindestens eines Alkanolalkoxylates der Formel (II) mit weniger als 90 Gew.% mindestens eines Aliphaten, mehr als 10 Gew.% mindestens eines Alkanolalkoxylates der Formel (II) mit weniger als 90 Gew.% mindestens eines Pflanzenöles, sowie mehr als 10 Gew.% mindestens eines Alkanolalkoxylates der Formel (II) mit weniger als 90 Gew.% mindestens eines Esters von Pflanzenölen. Eine weitere ganz besonders bevorzugte Ausführungsform sind Kombinationen in Mengen von mehr als 10 Gew.% mindestens eines Alkanolalkoxylates der Formel (II) mit weniger als 90 Gew.% mindestens eines alipatischen C6-C18 Alkohols.

Desweiteren sind bevorzugte Kombinationen von lipophilem Tensid und Öl von 30 bis 90 Gew.% mindestens eines nichtionischen Tensides und von 70 bis 10 Gew.% mindestens eines Aromaten, 30 bis 90 Gew.% mindestens eines nichtionischen Tensides und 70 bis 10 Gew.% mindestens eines Aliphaten, 30 bis 90 Gew.% mindestens eines nichtionischen Tensides und 70 bis 10 Gew.% mindestens eines Pflanzenöls, 30 bis 90 Gew.% mindestens eines nichtionischen Tensides und 70 bis 10 Gew.% mindestens eines Esters von Pflanzenölen sowie 30 bis 90 Gew.% mindestens eines nichtionischen Tensides und 70 bis 10 Gew.% mindestens eines Wachses, jeweils bezogen auf den Kapselkern. Eine weitere bevorzugte Ausführungsform sind Kombinationen von lipophilem Tensid und Öl von 30 bis 90 Gew.% mindestens eines nichtionischen Tensides und von 70 bis 10 Gew.% mindestens eines alipatischen C6-C18 Alkohols.

Besonders bevorzugt sind Kombinationen in Mengen von 30 bis 90 Gew.% mindestens eines Alkanolalkoxylates und 70 bis 10 Gew.% mindestens eines Aromaten, 30 bis 90 Gew.% mindestens eines Alkanolalkoxylates und 70 bis 10 Gew.% mindestens eines Aliphaten, 30 bis 90 Gew.% mindestens eines Alkanolalkoxylates und 70 bis 10 Gew.% mindestens eines Pflanzenöls, 30 bis 90 Gew.% mindestens eines Alkanolalkoxylates und 70 bis 10 Gew.% mindestens eines Esters von Pflanzenölen sowie 30 bis 90 Gew.% mindestens eines Alkanolalkoxylates und 70 bis 10 Gew.% mindestens eines niedrigschmelzenden Wachses. Eine weitere besonders bevorzugte Ausführungsform sind Kombinationen in Mengen von 30 bis 90 Gew.% mindestens eines Alkanolalkoxylates und 70 bis 10 Gew.% mindestens eines alipatischen C6-C18 Alkohols.

Ganz besonders bevorzugt sind Kombinationen in Mengen von 30 bis 90 Gew.% mindestens eines Alkanolalkoxylates der Formel (II) mit 70 bis 10 Gew.% mindestens eines Aromaten, 30 bis 90 Gew.% mindestens eines Alkanolalkoxylates der Formel (II) mit 70 bis 10 Gew.% mindestens eines Aliphaten, 30 bis 90 Gew.% mindestens eines Alkanolalkoxylates der Formel (II) mit 70 bis 10 Gew.% mindestens eines Pflanzenöles, sowie 30 bis 90 Gew.% mindestens eines Alkanolalkoxylates der Formel (II) mit 70 bis 10 Gew.% mindestens eines Esters von Pflanzenölen. Eine weitere ganz besonders bevorzugte Ausführungform sind Kombinationen in Mengen von 30 bis 90 Gew.% mindestens eines Alkanolalkoxylates der Formel (II) mit 70 bis 10 Gew.% mindestens eines alipatischen C6-C18 Alkohols.

Eine erfindungsgemäße wässerigen Dispersion wird hergestellt, indem man
(i) eine Mikrokapsel-Rohdispersion umfassend die Mikrokapseln bereitstellt und , mit
(ii) mindestens einer Agrochemikalie versetzt.

Bevorzugt wird die Mikrokapsel-Rohdispersion hergestellt, indem man eine wässerige Emulsion, die radikalisch polymerisierbare Monomere, lipophiles Tensid und Öl umfasst, erwärmt. Abhängig von dem eingesetzten Öl und dem lipophilem Tensid bildet sich die wässerige Emulsion bereits bei Raumtemperatur oder erst beim Erwärmen. In einer bevorzugten Ausführungsform umfasst die wässerige Emulsion radikalisch polymerisierbare Monomere, Radikalstarter, Schutzkolloid, lipophiles Tensid und Öl.

Im Allgemeinen stellt man zunächst eine wässerige Emulsion bereit, die radikalisch polymerisierbare Monomere, lipophiles Tensid sowie Öl umfasst, und erwärmt die wässerige Emulsion anschließend. In einer bevorzugten Ausführungsform stellt man die Wasserphase der Emulsion umfassend Schutzkolloid und die Ölphase der Emulsion umfassend lipophiles Tensid, Öl und mindestens ein Monomer getrennt bereit und emulgiert dann die beiden Phasen. Vorzugsweise wählt man die Emulgierbedingungen zur Herstellung der stabilen wässerigen Emulsion in an sich bekannter Weise so, dass die Öltröpfchen die Größe der gewünschten Mikrokapseln haben. Im Allgemeinen werden die Mikrokapseln kleiner je mehr Energie über die Scherkraft und die Rührgeschwindigkeit in den Reaktionsansatz eingetragen wird.

Die Polymerisation der Monomeren wird durch Erwärmung ausgelöst. Man kann die Polymerisation gegebenenfalls durch weitere Temperaturerhöhung steuern, wobei die entstehenden Polymere die Kapselwand bilden, welche den Kapselkern umschließt. Dieses allgemeine Prinzip wird beispielsweise in der WO 03/0166050 auf S. 7, Z. 17 bis S. 8, Z. 8 beschrieben, auf deren Inhalt ausdrücklich Bezug genommen wird. Im Allgemeinen wird während der Polymerisation weniger Energie eingetragen als während der Emulgierung. Bevorzugt wird dazu die Rührgeschwindigkeit reduziert und/oder ein anderer Rührertyp verwendet.

In der Regel führt man die Polymerisation bei Temperaturen von 20 bis 150 °C, vorzugsweise von 40 bis 120 °C und speziell von 60 bis 95 °C durch. Bevorzugt erfolgt die Erwärmung stufenweise. Natürlich sollte die Dispergier- und vorzugsweise auch die Polymerisationstemperatur oberhalb der Schmelztemperatur der Mischung von Öl und lipophilem Tensid liegen.

Abhängig von dem gewünschten Öl und dem lipophilen Tensid ist die Emulsion in der Regel bei einer Temperatur zu bilden, bei der das Kernmaterial flüssig oder ölig ist. Entsprechend sollte ein Radikalstarter gewählt werden, dessen Zerfallstemperatur oberhalb dieser Temperatur liegt. Entsprechend sollte die Polymerisation ebenfalls 2°C bis 50°C oberhalb dieser Temperatur durchgeführt werden, so dass man gegebenenfalls Radikalstarter wählt, deren Zerfallstemperatur oberhalb des Schmelzpunkts der Mischung von Öl und lipophilem Tensid liegt.

Eine gängige Verfahrensvariante für Öle mit einem Schmelzpunkt bis etwa 60 °C ist eine Reaktionstemperatur beginnend bei 60 °C, die im Verlauf der Reaktion auf 85 °C erhöht wird. Vorteilhafte Radikalstarter haben eine 10-Stunden Halbwertszeit im Bereich von 45 bis 65 °C, wie beispielsweise t-Butylperpivalat oder Dilauroylperoxid. Weitere Radikalstarter werden unten beschrieben.

Nach einer weiteren Verfahrensvariante für Öle mit einem Schmelzpunkt oberhalb 60 °C wählt man ein Temperaturprogramm, welches bei entsprechend höheren Reaktionstemperaturen startet. Für Anfangstemperaturen um 85 °C werden Radikalstarter mit einer 10-Stunden Halbwertszeit im Bereich von 70 bis 90 °C bevorzugt wie t-Butylper-2-ethylhexanoat. Weitere Radikalstarter werden unten beschrieben.

Zweckmäßigerweise wird die Polymerisation bei Normaldruck vorgenommen, jedoch kann man auch bei vermindertem oder leicht erhöhtem Druck z. B. bei einer Polymerisationstemperatur oberhalb 100 °C, arbeiten, also etwa im Bereich von 0,5 bis 10 bar.

Die Reaktionszeiten der Polymerisation betragen normalerweise 1 bis 10 Stunden, meistens 2 bis 5 Stunden.

Eine Verfahrensvariante unter Einsatz von Polyvinylalkohol und/oder teilhydrolysiertem Polyvinylacetat als Schutzkolloid ermöglicht eine vorteilhafte Verfahrensweise, gemäß der direkt bei erhöhter Temperatur dispergiert und polymerisiert wird.

Im Anschluss an die eigentliche Polymerisationsreaktion bei einem Umsatz von 90 bis 99 Gew.-% ist es in der Regel vorteilhaft, die wässrige Dispersion weitgehend frei von Geruchsträgern, wie Restmonomere und anderen flüchtigen organischen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, vorteilhaft durch redoxinitiierte Polymerisation, beispielsweise mit Kombinationen aus mindestens einem wasserlöslichen Peroxid wie tert.-Butylhydroperoxid mit Ascorbinsäure.

In der Regel wird die Mikrokapsel-Rohdispersion in Gegenwart wenigstens eines organischen oder anorganischen Schutzkolloids hergestellt. Sowohl organische als auch anorganische Schutzkolloide können ionisch oder neutral sein. Schutzkolloide können dabei sowohl einzeln wie auch in Mischungen mehrerer gleich oder unterschiedlich geladener Schutzkolloide eingesetzt werden.

Bevorzugte organische Schutzkolloide sind wasserlösliche Polymere. Insbesondere sind organische Schutzkolloide bevorzugt, welche die Oberflächenspannung des Wassers von 73 mN/m maximal auf 45 bis 70 mN/m senken und somit die Ausbildung geschlossener Kapselwände fördern sowie Mikrokapseln mit bevorzugten Teilchengrößen ausbilden.

Organische neutrale Schutzkolloide sind beispielsweise Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykol, Polyvinylalkohol und partiell hydrolysierte Polyvinylacetate sowie Methylhydroxypropylcellulose.

Polyvinylalkohol ist erhältlich durch Polymerisieren von Vinylacetat, gegebenenfalls in Gegenwart von Comonomeren, und Hydrolyse des Polyvinylacetats unter Abspaltung der Acetylgruppen unter Bildung von Hydroxylgruppen. Der Hydrolysegrad der Polymeren kann beispielsweise von 1 bis 100 % betragen und liegt bevorzugt in dem Bereich von 50 bis 100 % insbesondere von 65 bis 95 %. Unter teilhydrolysierten Polyvinylacetaten ist im Rahmen dieser Anmeldung ein Hydrolysegrad von weniger als 50 % und unter Polyvinylalkohol ein Hydrolysegrad von mindestens 50 bis 100 % zu verstehen.

Bevorzugt werden Polyvinylalkohole oder teilhydrolysierte Polyvinylacetate, deren Viskosität einer 4 Gew.-%igen wässrigen Lösung bei 20 °C nach DIN 53015 einen Wert im Bereich von 3 bis 56 mPa_{*}s aufweist, bevorzugt einen Wert von 14 bis 45 mPa_{*}s. Bevorzugt werden Polyvinylalkohole mit einem Hydrolysegrad von mindestens 65 %, bevorzugt mindestens 70 % insbesondere mindestens 75 %.

Organische anionische Schutzkolloide sind beispielsweise Natriumalginat, Polymethacrylsäure und ihre Copolymerisate, die Copolymerisate des Sulfoethylacrylats und - methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure. Bevorzugte organisch anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Als anorganische Schutzkolloide, sind so genannte Pickering-Systeme zu nennen, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium oder Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat oder Tricalciumphosphat.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden, die auch als Silica-Sole bezeichnet werden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH von 2 bis 7 eingestellt wird.

Gemäß einer Ausführungsform werden anorganische Schutzkolloide sowie ihre Mischungen mit organischen Schutzkolloiden bevorzugt.

Gemäß einer weiteren Ausführungsform werden organische neutrale Schutzkolloide bevorzugt. Bevorzugt werden OH-Gruppen tragende Schutzkolloide wie Polyvinylalkohole, partiell hydrolysierte Polyvinylacetate und Methylhydroxypropylcellulose. Besonders bevorzugt werden Mischungen von mindestens zwei neutralen Schutzkolloiden, insbesondere von mindestens zwei OH-Gruppen tragenden Schutzkolloiden. Ganz besonders bevorzugt sind Mischungen aus Polyvinylalkohol und Methylhydroxypropy-Icellulose.

Im allgemeinen werden die Schutzkolloide in Mengen von 0,1 bis 15 Gew.%, vorzugsweise von 0,5 bis 10 Gew.% eingesetzt, bezogen auf die Wasserphase. Für anorganische Schutzkolloide werden dabei bevorzugt Mengen von 0,1 bis 15 Gew.%, vorzugsweise von 0,5 bis 10 Gew.% bezogen auf die Wasserphase, gewählt.

Organische Schutzkolloide werden bevorzugt in Mengen von 0,1 bis 15 Gew.%, vorzugsweise von 0,5 bis 10 Gew.%, bezogen auf die Wasserphase der Emulsion. Gemäß einer speziellen Ausführungsform werden von 0,1 bis 15 Gew.%, vorzugsweise von 0,5 bis 10 Gew.% organisch neutrale Schutzkolloide bevorzugt. Besonders bevorzugt werden dabei von 0,1 bis 15 Gew.%, vorzugsweise von 0,5 bis 10 Gew.% OH-Gruppen tragende Schutzkolloide wie Polyvinylalkohole, partiell hydrolysierte Polyvinylacetate und Methylhydroxypropylcellulose.

Abhängig vom Herstellungsverfahren und dem dabei gewählten Schutzkolloid bzw. den Schutzkolloiden kann dieses ebenfalls Bestandteil der Mikrokapseln sein. So können bis zu 10 Gew.-% bezogen auf das Gesamtgewicht der Mikrokapseln Schutzkolloid sein. Gemäß dieser Ausführungsform weisen die Mikrokapseln auf der Oberfläche des Polymers das Schutzkolloid bzw. die Schutzkolloide auf.

Optional können in dem Herstellverfahren übliche Additive zugesetzt werden. Bevorzugt werden als Additiv anionische, niedermolekulare Tenside zusgesetzt, beispielsweise Natriumlaurylsulphat oder Natriumlaurylethersulfat.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomere, eingesetzt werden. Je nach Aggregatzustand des Radikalstarters und seinem Löslichkeitsverhalten kann er als solcher, bevorzugt jedoch als Lösung, Emulsion oder Suspension zugeführt werden, wodurch sich insbesondere kleine Stoffmengen Radikalstarter präziser dosieren lassen.

Als bevorzugte Radikalstarter sind tert.-Butylperoxoneodecanoat, tert.-Amylperoxypivalat, Dilauroylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen. Besonders bevorzugte Radikalstarter sind Di-(3,5,5-trimethylhexanoyl)-peroxid, 4,4'-Azobisisobutyronitril, tert.-Butylperpivalat, Dilauroylperoxid und Dimethyl-2,2-azobisisobutyrat. Diese weisen eine Halbwertzeit von 10 Stunden in einem Temperaturbereich von 30 bis 100 °C auf.

Weiterhin ist es möglich zur Polymerisation dem Fachmann bekannte Regler in üblichen Mengen zuzusetzen wie tert-Dodecylmercaptan oder Ethylhexylthioglycolat.

Die Mikrokapsel-Rohdispersiom, wird zur Herstellung einer erfindungsgemäßen wässerigen Dispersion verwendet.

Die Mikrokapsel-Rohdispersion kann nach der Herstellung vorzugsweise direkt verarbeitet werden. Der Feststoffgehalt beträgt im Allgemeinen 5 bis 80 Gew.%, bevorzugt 20 bis 60 Gew.%. Die Mikrokapsel-Rohdispersion kann auch aufkonzentriert werden, indem sie gegebenenfalls teilweise von der flüssigen Phase befreit wird, bevor sie mit einer Agrochemikalie versetzt wird.

Die Mikrokapsel-Rohdispersion wird mit mindestens einer Agrochemikalie versetzt. Geeignete Agrochemikalien werden unten genannt. Bevorzugt wird die Mikrokapsel-Rohdispersion mit einer wässerigen Zusammensetzung umfassend mindestens eine flüssige und/oder feste Agrochemikalie versetzt. Besonders bevorzugt wird sie mit einer wässerigen Zusammensetzung umfassend mindestens eine, insbesondere eine, feste Agrochemikalie versetzt. Wird die Mikrokapsel-Rohdispersion mit einer festen Agrochemikalie versetzt, umfasst die kontinuierliche Phase üblicherweise die Agrochemikalien in Form suspendierter Partikel. Die Mengenverhältnisse können dabei in einem weiten Bereich variieren. Im Allgemeinen setzt man die Komponenten in solchen Gewichtsverhältnissen ein, dass auf 1 Gew.-Teil Agrochemikalie von 0,1 bis 5 Gew.-Teile, bevorzugt von 0,4 bis 2 Gew.-Teile der Gesamtmenge Öl und lipophiles Tensid in mikoverkapselter Form vorhanden sind. In einer bevorzugten Ausführungsform setzt man die Komponenten in solchen Gewichtsverhältnissen ein, dass auf 1 Gew.-Teil Agrochemikalie von 0,1 bis 5 Gew.-Teile, bevorzugt von 0,4 bis 2 Gew.-Teile lipophiles Tensid in mikoverkapselter Form vorhanden sind.

In einer speziellen Ausführungsform sind die erfindungsgemäßen wässerigen Dispersionen sogenannte Suspensionskonzentrate umfassend Mikrokapseln, mindestens ein Pflanzenschutzmittel in Form suspendierter Partikel und gegebenenfalls weitere Formulierungshilfsmittel. Beispiele für solche Formulierungshilfsmittel sind Gefrierschutzmittel, Farbstoffe, Verdickungsmittel, Benetzungsmittel oder Dispergiermittel.

Die erfindungsgemäße wässerige Dispersion umfassend Mikrokapseln kann vor der Anwendung auch in für die Landwirtschaft üblichen Mengen mit Wasser verdünnt werden.

Die erfindungsgemäße wässerige Dispersion der Mikrokapseln kann den Kapselinhalt umfassend Öl und lipophiles Tensid in der Regel beim Eintrocknen freisetzen. Eine mögliche Erklärung (ohne daran gebunden zu sein) besteht darin, dass die Mikrokapselwände in wässriger Lösung hydratisiert sind, also auf der Außenseite der Kapselwand Wasser und Schutzkolloid angelagert sind. Diese Art von "zweiter Hülle" wäre sehr polar und würde verhindern, dass Öl und lipophiles Tensid aus dem Kapselkern nach außen diffundiert. Beim Eintrocknen der Dispersion würde die "zweite Hülle" zerstört und damit die sehr polare Diffusionsbarriere wegfallen. Öl und lipophiles Tensid könnten nun leichter in und durch die Kapselwand diffundieren. Das in die Kapselwand eindiffundierende lipophile Tensid könnte als Weichmacher wirken und zur Destabilisierung der Kapselwand beitragen.

Die erfindungsgemäße wässerige Dispersion umfassend Mikrokapseln kann für solche industrielle Anwendungen verwendet werden, bei denen der Kapselinhalt beim Eintrocknen einer wässerigen Dispersion von Mikrokapseln freigesetzt wird. Das Eintrocknen einer wässerigen Dispersion geschieht im Allgemeinen durch Verdunsten des wässerigen Anteils der applizierten Dispersion. Das Eintrocknen kann beispielsweise in freier Natur stattfinden bei Temperaturen von -20 bis +100 °C, bevorzugt bei 0 bis 40 °C, bei üblichem Luftdruck und Luftfeuchtigkeit, beispielsweise von höchstens 95 %, bevorzugt höchstens 80 %. Es ist auch möglich unter künstlichen Bedingungen bei höheren Temperaturen oder vermindertem Luftdruck das Eintrocknen zu beschleunigen.

Die Erfindung betrifft auch ein Verfahren zur Bekämpfung unerwünschten Pflanzenwuchses und /oder zur Bekämpfung von unerwünschtem Insekten- oder Milbenbefall auf Pflanzen und/oder zur Bekämpfung von phytopathogenen Pilzen, wobei man Saatgüter von Nutzpflanzen mit der wässrigen Dispersion behandelt.

Außerdem betrifft die Erfindung ein Verfahren zur Bekämpfung unerwünschten Pflanzenwuchses und /oder zur Bekämpfung von unerwünschtem Insekten- oder Milbenbefall auf Pflanzen und/oder zur Bekämpfung von phytopathogenen Pilzen, wobei man die Pilze / Insekten, deren Lebensraum oder die vor Pilz- oder Insektenbefall zu schützenden Pflanzen oder Böden bzw. die unerwünschten Pflanzen, den Boden auf denen die unerwünschten Pflanzen wachsen, oder deren Saatgüter mit der wässrigen Dispersion behandelt.

Die Behandlung der vorgenannten Pilze, Insekten, Planzen und/oder deren Lebensräuem erfolgt bevorzugt durch Applikation der erfindungsgemäßen wässerigen Dispersion. Bevorzugt erfolgt die Applikation durch Versprühen.

Als Agrochemikalien werden Pflanzenschutzmittel und Düngemittel verstanden. Geeignete Pflanzenschutzmittel sind Akarizide, Algizide, Aphizide, Bakterizide, Fungizide, Herbizide, Insektizide, Molluskizide, Nematizide, Keimungshemmstoffe, Safener oder Wachstumsregulatoren. Beispiele für Düngemittel sind mineralische Ein- oder Mehrnährstoffdünger, organische und organisch-mineralische Dünger oder Dünger mit Spurennährstoffen. Bevorzugte Agrochemikalien sind Pflanzenschutzmittel.

Fungizide sind Verbindungen, die Pilze und deren Sporen abtöten oder ihr Wachstum hemmen. Beispiele für geeignete Fungizide sind Strobilurine, Carboxamide, Azole, Stickstoffhaltige Heterocyclylverbindungen, Carbamate und Dithiocarbamate, sonstige Fungizide wie Guanidine, Antibiotika, Organometallische Verbindungen, Schwefelhaltige Heterocyclylverbindungen, Organophosphorverbindungen, Organochlorverbindungen, Nitrophenylderivative, anorganische Wirkstoffe.

Insektizide sind Verbindungen, die sich in ihrer Wirkung besonders gegen Insekten und deren Entwicklungsformen richten. Beispiele für geeignete Insektizide sind Organo(thio)phosphate, Carbamate, Pyrethroide, Wachstumsregulatoren, Nikotin Rezeptor Agonisten/Antagonisten, GABA Antagonisten, Makrolide, METI I Verbindungen, METI II und III Verbindungen, Entkoppler, Inhibitoren der oxidativen Phosphorilierung, Häutungsstörende Verbindungen, Inhibitoren der Mixed-Function-Oxidase, Natriumkanalblocker.

Unter Herbiziden versteht man Verbindungen, die aktiv sind gegen allgemein Wild- und Kulturpflanzen, die an ihrem jeweiligen Standort unerwünscht sind (Schadpflanzen). Beispiele für geeignete herbizide sind Lipid Biosynthese Inhibitoren, ALS Inhibitoren, Photosynthese Inhibitoren, Protoporphyrinogen-IX Oxidase Inhibitoren, Bleichmittel-Herbizide, EPSP Synthase Inhibitoren, Glutamin-Synthase-Inhibitoren, DHP Synthase Inhibitoren, Mitose Inhibitoren, VLCFA Inhibitoren, Cellulose Biosynthese Inhibitoren, Entkoppler Herbizide, Auxin Herbizide, Auxin Transport Inhibitoren, Safener-Herbizide. Insgesamt bieten die erfindungsgemäßen wässerigen Dispersionen umfassend Mikrokapseln viele Vorteile gegenüber herkömmlichen Dispersionen mit Mikrokapseln:
Die Mikrokapseln in der erfindungsgemäßen wässerigen Dispersion setzen beim Eintrocknen einer wässerigen Dispersion genannter Mikrokapseln den Inhalt des Kapselkerns frei. Die Mikrokapseln sind für agrochemische Verwendung geeignet und können penetrationsfördernde Verbindungen wie Öl oder lipophiles Tensid enthalten und wieder freisetzen. Mit Hilfe der Mikrokapseln konnten Suspensionskonzentrate von Pflanzenschutzmitteln umfassend penetrationsfördernde Verbindungen wie Öl und/oder lipophiles Tensid bereitgestellt werden, in denen die Kristallisation der Pflanzenschutzmittel vermindert ist. Mit Hilfe der Mikrokapseln konnten Suspensionskonzentrate von Pflanzenschutzmitteln bereitgestellt werden, die eine erhöhte biologische Wirksamkeit im Vergleich zu herkömmlichen Suspensionskonzentraten ohne Adjuvans zeigten. Zur Herstellung der Mikrokapseln werden Isocyanate verwendet, die toxisch und hochreaktiv gegenüber anderen Einsatzstoffen sind.

Nachfolgende Beispiele erläutern die Erfindung ohne sie einzuschränken.

### Beispiele

Einsatzstoffe:
Öl 1: technisches Aromatengemisch mit einem Siedebereich von 235 bis 290 °C, einem Erstarrungspunkt von unter-5°C und einem Anilinpunkt von 12 °C.
Öl 2: raffiniertes Sojaöl.
Öle 3: Dodecanol.
Öl 4: hochdruckhydriertes Mineralöl mit einer Viskosität von ca. 68 mm²/s bei 40 °C und einem Pourpoint (Erstarrungspunkt) von -21 °C.
Öle 5: Maiskeimöl.
Tensid 1: C₁₆/C₁₈-Fettalkoholalkoxylat mit durchschnittlich 2 bis 7 Ethylenoxideinheiten und 5 bis 15 Propylenoxideinheiten.
Tensid 2: C13-Alkoholalkoxylat mit durchschnittlich 2 bis 7 Ethylenoxideinheiten und 1-5 Propylenoxideinheiten.
Tensid 3: C13-Alkoholalkoxylat mit durchschnittlich 5 bis 8 Ethylenoxideinheiten.
Tensid 4: C13/C15-Alkoholalkoxylat mit durchschnittlich 3 bis 5 Ethylenoxideinheiten und einer Butylenoxideinheit, methyliert.
Schutzkolloid 1: Methylhydroxypropylcellulose (mit einer Viskosität nach Brookfield (bei 20 °C, 20 rpm, 2 wt%-ig) von 90-125 mPas), 5 Gew.% Lösung in Wasser.
Schutzkolloid 2: Polyvinylalkohol-Lösung: 10 Gew.% in Wasser, Hydrolysegrad 79 %, mittlerer Polymerisationsgrad PW: 1900
   - MMA:: Methylmethacrylat
   - MAS:: Methacrylsäure
   - BDA2:: 1,4-Butandioldiacrylat

### Beispiel 1

Zunächst wurde die Wasser- und die Ölphase separat mit folgender Zusammensetzung hergestellt:

**Wasserphase:**

| | |
|---|---|
| 240,0 g | Wasser |
| 95,0 g | Schutzkolloid 1 |
| 23,8 g | Schutzkolloid 2 |
| 1,1 g | einer 2,5 gew.-%igen wässrigen Natriumnitrit-Lösung |

**Ölphase:**

| | |
|---|---|
| 132 g | Tensid 1 |
| 88 g | Öl 1 |
| 8,6 g | Methylmethacrylat |
| 3,7 g | Methacrylsäure |
| 0,35 g | einer 75% igen Lösung von tert-Butylperpivalat in aliphatischen Kohlenwasserstoffen |

**Zulauf 1:**

| | |
|---|---|
| 2,69 g | einer 10 gew.-%igen wässrigen tert-Butylhydroperoxidlösung |

**Zulauf 2:**

| | |
|---|---|
| 14,15 g | einer 1 %igen wässrigen Ascorbinsäure-Lösung |

Bei Raumtemperatur wurde die Wasserphase vorgelegt. Nach Zugabe der Ölphase wurde mit einem Dissolverrührer bei 3500 Upm für 40 Minuten dispergiert. Die entstandene Emulsion wurde unter Rühren mit einem Ankerrüher in 60 Minuten auf 70 °C, innerhalb von weiteren 60 Minuten auf 85 °C aufgeheizt und für eine Stunde bei 85 °C gehalten. Zu der entstandenen Mikrokapseldispersion wurde unter Rühren Zulauf 1 dazugegeben. Der Zulauf 2 wurde unter Rühren in 90 Minuten zudosiert, während auf Raumtemperatur abgekühlt wurde. Die entstandene Mikrokapseldispersion besaß einen Feststoffgehalt von 40 % und eine mittlere Teilchengröße 2,45 µm (gemessen mit Fraunhoferbeugung, Volumenmittelwert).

### Beispiel 2

Zunächst wurde die Wasser- und die Ölphase separat mit folgender Zusammensetzung hergestellt:

**Wasserphase:**

| | |
|---|---|
| 240,0 g | Wasser |
| 95,0 g | Schutzkolloid 1 |
| 23,8 g | Schutzkolloid 2 |
| 2,04 g | einer wässrigen 15 Gew.-%igen Natriumlaurylsulfat-Lösung |
| 1,1 g | einer 2,5 Gew.-%igen wässrigen Natriumnitrit-Lösung |

**Ölphase:**

| | |
|---|---|
| 132 g | Tensid 1 |
| 88 g | Öl 2 |
| 17,1 g | Methylmethacrylat |
| 7,4 g | Methacrylsäure |
| 0,35 g | einer 75% igen Lösung von tert-Butylperpivalat in aliphat. Kohlenwasserstoffen |

**Zulauf 1:**

| | |
|---|---|
| 2,69 g | einer 10 gew.-%igen wässrigen tert-Butylhydroperoxidlösung, |

**Zulauf 2:**

| | |
|---|---|
| 14,15 g | einer 1 %igen wässrigen Ascorbinsäure-Lösung |

Bei Raumtemperatur wurde die Wasserphase vorgelegt. Nach Zugabe der Ölphase wurde mit einem Dissolverrührer bei 3500 Upm für 40 Minuten dispergiert. Die erhaltene Emulsion wurde unter Rühren mit einem Ankerrüher in 60 Minuten auf 70 °C, innerhalb von weiteren 60 Minuten auf 85 °C aufgeheizt und für eine Stunde bei 85 °C gehalten. Zu der entstandenen Mikrokapseldispersion wurde unter Rühren Zulauf 1 dazugegeben. Der Zulauf 2 wurde unter Rühren in 90 Minuten zudosiert, während auf Raumtemperatur abgekühlt wurde. Die entstandene Mikrokapseldispersion besaß einen Feststoffgehalt von 40,6 % und eine mittlere Teilchengröße 2,68 µm (gemessen mit Fraunhoferbeugung, Volumenmittelwert).

### Beispiel 3:

Zunächst wurde die Wasser- und die Ölphase separat mit folgender Zusammensetzung hergestellt:

**Wasserphase:**

| | |
|---|---|
| 240,0 g | Wasser |
| 95,0 g | Schutzkolloid 1 |
| 23,8 g | Schutzkolloid 2 |
| 2,04 g | einer wässrigen 15 %igen Natriumlaurylsulfat-Lösung |
| 1,1 g | einer 2,5 gew.-%igen wässrigen Natriumnitrit-Lösung |

**Ölphase:**

| | |
|---|---|
| 132 g | Tensid 2 |
| 88 g | Öl 3 |
| 17,1 g | Methylmethacrylat |
| 7,4 g | Methacrylsäure |
| 0,35 g | einer 75% igen Lösung von tert-Butylperpivalat in aliphat. Kohlenwasserstoffen |

**Zulauf 1:**

| | |
|---|---|
| 2,69 g | einer 10 gew.-%igen wässrigen tert-Butylhydroperoxidlösung, |

**Zulauf 2:**

| | |
|---|---|
| 14,15 g | einer 1 %igen wässrigen Ascorbinsäure-Lösung |

Die Wasserphase wurde bei 60 °C vorgelegt. Die Ölphase wurde auf 60 °C erhitzt, zugegeben und mit einem Dissolverrührer bei 3500 Upm für 40 Minuten bei 60 °C dispergiert. Nach Zugabe des Radikalstarters wurde die Emulsion unter Rühren mit einem Ankerrüher in 60 Minuten auf 85 °C aufgeheizt und für zwei Stunden bei 85 °C gehalten. Zu der entstandenen Mikrokapseldispersion wurde unter Rühren Zulauf 1 dazugegeben. Der Zulauf 2 wurde unter Rühren bei über 90 Minuten dosiert zugegeben, während auf Raumtemperatur abgekühlt wurde. Die entstandene Mikrokapseldispersion besaß einen Feststoffgehalt von 40,5 % und eine mittlere Teilchengröße 24,9 µm (gemessen mit Fraunhoferbeugung, Volumenmittelwert).

### Beispiel 4-7

Beispiel 4 wurde analog Beispiel 1 durchgeführt.

Beispiele 5 und 6 wurde analog Beispiel 2 durchgeführt.

Beispiel 7 wurde analog Beispiel 3 durchgeführt.

Die Einzelheiten zu Beispiel 4-7 sind in Tabelle 1 zusammengefasst.

### Beispiel 8 - Stabilität der Formulierung

295 g eines Suspensionskonzentrats (SC) von Dimoxystrobin (500 g/l) und 118 g eines Suspensionskonzentrats von Epoxiconazol (500 g/l) wurden in einen Metallbecher mit Propellerrührer gegeben. Unter Rühren bei 2000 Upm wurden 489,2 g der Dispersion aus Beispiel 2 gegeben und 10 Minuten gerührt.
Die Proben wurden bei 40 oder 50 °C für 12 Wochen gelagert und die Partikelgrößen wurden nach 10 min (Start), nach 2 und nach 12 Wochen bestimmt. Parallel dazu wurde eine Probe hergestellt, welche das unverkapselte lipophile Tensid 1 in gleicher Konzentration wie in Beispiel 2 enthielt, und eine Probe ohne lipophiles Tensid 1. Die Partikelgrößen der Proben wurden mit Hilfe eines Malvern Mastersizer 2000 bestimmt und sind in Tabelle 2 dargestellt. Die Partikelgröße ist als D(v, 50 %) Wert angegeben, das bedeutet als mittlerer Durchmesser von 50 % der Partikel (Verteilungsart: Volumen).

Der Versuch zeigt, dass die Verkapselung des Tensids zu einer stabileren Formulierung führt im Vergleich zu einer Formulierung, in der das Tensid nicht verkapselt ist.

**Tabelle 2**

| Probe | Partikelgrößen [µm] | | | | |
|---|---|---|---|---|---|
| | Start | 2 Wochen, 40 °C | 2 Wochen, 50 °C | 12 Wochen, 40 °C | 12 Wochen, 50 °C |
| ohne Tensid 1¹⁾ | 1,4 | 1,4 | 1,5 | 1,6 | 1,6 |
| unverkapseltes Tensid 1¹⁾ | 2,0 | 2,3 | 2,5 | 2,5 | 3,0 |
| Verkapseltes Tensid 1 (Beispiel 2) | 1,9 | 2,2 | 2,1 | 2,3 | 2,1 |

| | | | | | |
|---|---|---|---|---|---|
| 1) nicht erfindungsgemäß | | | | | |

### Beispiel 9 - biologische Wirkung

Mit dem erfindungsgemäß verkapselten lipophilen Tensid wurden Versuche zur Bestimmung der Pflanzenschutzwirkung unternommen. Dazu wurden die Proben der verkapselten lipophilen Tenside aus Beispiel 1, 3, 5 oder 6 mit einem Suspensionskonzentrat (SC) von Epoxiconazol (500 g/l) gemischt, so dass auf einen Gewichtsteil Wirkstoff zwei Gewichtsteile lipophiles Tensid kamen. Diese Mischungen wurden in Konzentrationen von 50, 25 und 12,5 ppm auf mit Weizenbraunrost erkrankte Weizenpflanzen durch Versprühen aufgegeben. Als Vergleich wurden jeweils das nichtverkapselte Tensid und die SC-Formulierung ohne Tensid getestet. Der Befall der Pflanzen ohne Zugabe von Pflanzenschutzmittel lag bei 80 %.

Zur Auswertung wurde der prozentuale Befall der Pflanzen nach 8 Tagen geprüft. Die Ergebnisse der Versuche sind in Tabelle 3 wiedergegeben.

**Tabelle 3**

| Behandlung mit Tensdid | Befall der Pflanzen [%] | | |
|---|---|---|---|
| | 50 ppm²⁾ | 25 ppm²⁾ | 12,5 ppm²⁾ |
| ohne Tensid¹⁾ | 25 | 37 | 57 |
| Tensid 1 unverkapselt¹⁾ | 3 | 4 | 37 |
| Tensid 1 (Beispiel 1) | 2 | 3 | 35 |
| Tensid 2 unverkapselt¹⁾ | 1 | 9 | 40 |
| Tensid 2 (Beispiel 3) | 2 | 12 | 43 |
| Tensid 3 unverkapselt¹⁾ | 5 | 11 | 29 |
| Tensid 3 (Beispiel 5) | 6 | 16 | 33 |
| Tensid 4 unverkapselt¹⁾ | 3 | 7 | 47 |
| Tensid 4 (Beispiel 6) | 5 | 10 | 42 |

| | | | |
|---|---|---|---|
| 1) nicht erfindungsgemäß. 2) Konzentration von Epoxiconazol in der applizierten Formulierung. | | | |

**Tabelle 1**

| Beispiel Nr. | Tensid | Öl | Lipophiles Tensid / Öl 1 ^{a)} | Monomere | GewichtsVerhältnis der Monomere | Kern / Wand ^{b)} | Feststoffgehalt (Gew.%) | mittlere Teilchengröße [µm] |
|---|---|---|---|---|---|---|---|---|
| 4 | Tensid 1 | Öl 4 | 60/40 | MMA / MAS | 70/30 | 90/10 | 40,5 | 20,5 |
| 5 | Tensid 3 | Öl 5 | 60/40 | MMA / MAS | 70/30 | 90/10 | 40,6 | 77,2 |
| 6 | Tensid 4 | Öl 5 | 60/40 | MMA / MAS | 70/30 | 90/10 | 40, | 5,9 |
| 7 | Tensid 2 | Öl 3 | 40/60 | MMA / MAS / BDA2 | 60/30/10 | 90/10 | 40,6 | 2,6 |

| | | | | | | | | |
|---|---|---|---|---|---|---|---|---|
| a) Gewichtsverhältnis b) Das Gewichtsverhältnis Kern / Wand bezieht sich auf das Verhältnis der Summe Öl und lipophiles Tensid zur Summe der Monomeren | | | | | | | | |

## Patentansprüche

1. Wässerige Dispersion umfassend Mikrokapseln, deren Kapselwand aus radikalisch polymerisierten Monomeren aufgebaut ist und deren Kapselkern mindestens ein Öl umfasst, **dadurch gekennzeichnet, dass** der Kapselkern mindestens ein lipophiles Tensid und die kontinuierliche Phase der Dispersion mindestens eine Agrochemikalie umfasst, und wobei die radikalisch polymerisierten Monomere Acrylsäure und ihre Ester, Methacrylsäure und ihre Ester, Maleinsäure und ihre Ester, Styrol, Butadien, Isopren, Vinylacetat oder Vinylpropionat sind.

2. Wässerige Dispersion nach Anspruch 1, wobei der Kapselkern mehr als 10 Gew.% mindestens eines lipophilen Tensids und weniger als 90 Gew.% mindestens eines Öls umfasst, jeweils bezogen auf den Kapselkern.

3. Wässerige Dispersion nach Anspruch 1 oder 2, wobei die kontinuierliche Phase der Dispersion mindestens eine Agrochemikalie in Form suspendierter Partikel umfasst.

4. Wässerige Dispersion nach den Ansprüchen 1 bis 3, wobei das lipophile Tensid mindestens ein Alkanolalkoxylat umfasst.

5. Wässerige Dispersion nach den Ansprüchen 1 bis 4, wobei das Öl ein Aromat, Aliphat, Pflanzenöl oder Ester von Pflanzenöl, jeweils einzeln oder in Mischung, ist.

6. Wässerige Dispersion nach den Ansprüchen 1 bis 5, wobei die Kapselwand aufgebaut ist aus
30 bis 100 Gew.% von einem oder mehreren Monomeren, die C₁-C₂₄-Alkylester der Acrylsäure, C₁-C₂₄-Alkylester der Methacrylsäure, Acrylsäure, Methacrylsäure, und Maleinsäure sind (Monomere I),
0 bis 20 Gew.% von einem oder mehreren bi- und/oder polyfunktionellen Monomeren (Monomere II), welche in Wasser nicht löslich oder schwer löslich sind und
0 bis 50 Gew.% von einem oder mehreren sonstigen Monomeren (Monomere III),
jeweils bezogen auf das Gesamtgewicht der Monomere.

7. Verfahren zur Herstellung der wässerigen Dispersion gemäß den Ansprüchen 1 bis 6, indem man
(i) eine Mikrokapsel-Rohdispersion umfassend die Mikrokapseln gemäße einem der Ansprüche 1 bis 6bereitstellt und
(ii) mit mindestens einer Agrochemikalie versetzt.

8. Verfahren nach Anspruch 7, wobei man die Mikrokapsel-Rohdispersion durch Erwärmen einer wässerigen Emulsion, die radikalisch polymerisierbare Monomere, lipophiles Tensid und Öl umfasst, herstellt.

9. Verfahren nach Anspruch 8, wobei die wässerige Emulsion radikalisch polymerisierbare Monomere, Radikalstarter, Schutzkolloid, lipophiles Tensid und Öl umfasst.

10. Verwendung der Mikrokapsel-Rohdispersion nach Anspruch 7, zur Herstellung der wässerigen Dispersion gemäß den Ansprüchen 1 bis 6.

11. Verfahren zur Bekämpfung unerwünschten Pflanzenwuchses und/oder zur Bekämpfung von unerwünschtem Insekten- oder Milbenbefall auf Pflanzen und/oder zur Bekämpfung von phytopathogenen Pilzen, indem man Saatgüter von Nutzpflanzen mit der wässerigen Dispersion gemäß einem der Ansprüche 1 bis 6 behandelt.

12. Verfahren zur Bekämpfung unerwünschten Pflanzenwuchses und/oder zur Bekämpfung von unerwünschtem Insekten- oder Milbenbefall auf Pflanzen und/oder zur Bekämpfung von phytopathogenen Pilzen, indem man die Pilze/Insekten, deren Lebensraum oder die vor Pilz- oder Insektenbefall zu schützenden Pflanzen oder Böden bzw. die unerwünschten Pflanzen, den Boden auf denen die unerwünschten Pflanzen wachsen, oder deren Saatgüter mit der wässerigen Dispersion gemäß einem der Ansprüche 1 bis 6 behandelt.

## Claims

1. An aqueous dispersion comprising microcapsules, the capsule wall of which is formed from radically polymerized monomers and the capsule core of which comprises at least one oil, wherein the capsule core comprises at least one lipophilic surfactant and the continuous phase of the dispersion comprises at least one agrochemical, and in which the radically polymerized monomers are acrylic acid and its esters, methacrylic acid and its esters, maleic acid and its esters, styrene, butadiene, isoprene, vinyl acetate or vinyl propionate.

2. The aqueous dispersion according to claim 1, in which the capsule core comprises more than 10% by weight of at least one lipophilic surfactant and less than 90% by weight of at least one oil, in each case based on the capsule core.

3. The aqueous dispersion according to claim 1 or 2, in which the continuous phase of the dispersion comprises at least one agrochemical in the form of suspended particles.

4. The aqueous dispersion according to claims 1 to 3, in which the lipophilic surfactant comprises at least one alkanol alkoxylate.

5. The aqueous dispersion according to claims 1 to 4, in which the oil is an aromatic compound, aliphatic compound, vegetable oil or ester of vegetable oil, in each case alone or in a mixture.

6. The aqueous dispersion according to claims 1 to 5, in which the capsule wall is formed from 30 to 100% by weight of one or more monomers which are C₁-C₂₄-alkyl esters of acrylic acid, C₁-C₂₄-alkyl esters of methacrylic acid, acrylic acid, methacrylic acid and maleic acid (monomers I),
0 to 20% by weight of one or more bi- and/or polyfunctional monomers (monomers II) which are insoluble or sparingly soluble in water, and
0 to 50% by weight of one or more other monomers (monomers III),
in each case based on the total weight of the monomers.

7. A process for the preparation of an aqueous dispersion according to claims 1 to 6, by
(i) providing a microcapsule crude aqueous dispersion comprising microcapsules according to any of claims 1 to 6 and
(ii) mixing with at least one agrochemical.

8. The process according to claim 7, in which the microcapsule crude dispersion is prepared by heating an aqueous emulsion comprising radically polymerizable monomers, lipophilic surfactant and oil.

9. The process according to claim 8, in which the aqueous emulsion comprises radically polymerizable monomers, radical initiator, protective colloid, lipophilic surfactant and oil.

10. The use of the microcapsule crude dispersion according to claim 7 for the preparation of the aqueous dispersion according to claims 1 to 6.

11. A process for combating undesirable plant growth and/or for combating undesirable insect or acarid infestation on plants and/or for combating phytopathogenic fungi, wherein seeds of useful plants are treated with the aqueous dispersion according to any of claims 1 to 6.

12. A process for combating undesirable plant growth and/or for combating undesirable insect or acarid infestation on plants and/or for combating phytopathogenic fungi, wherein the fungi/insects, their habitat or the plants or soil to be protected from fungal or insect infestation, or the undesirable plants, the soil in which the undesirable plants grow or their seeds, are treated with the aqueous dispersion according to any of claims 1 to 6.

## Revendications

1. Dispersion aqueuse comprenant des microcapsules, dont la paroi de capsule est formée par des monomères polymérisés par voie radicalaire et dont le noyau de capsule comprend au moins une huile, **caractérisée en ce que** le noyau de capsule comprend au moins un tensioactif lipophile et la phase continue de la dispersion comprend au moins un agent agrochimique, les monomères polymérisés par voie radicalaire étant l'acide acrylique et ses esters, l'acide méthacrylique et ses esters, l'acide maléique et ses esters, le styrène, le butadiène, l'isoprène, l'acétate de vinyle ou le propionate de vinyle.

2. Dispersion aqueuse selon la revendication 1, dans laquelle le noyau de capsule comprend plus de 10 % en poids d'au moins un tensioactif lipophile et moins de 90 % en poids d'au moins une huile, à chaque fois par rapport au noyau de capsule.

3. Dispersion aqueuse selon la revendication 1 ou 2, dans laquelle la phase continue de la dispersion comprend au moins un agent agrochimique sous la forme de particules suspendues.

4. Dispersion aqueuse selon les revendications 1 à 3, dans laquelle le tensioactif lipophile comprend au moins un alcoxylate d'alcanol.

5. Dispersion aqueuse selon les revendications 1 à 4, dans laquelle l'huile est un composé aromatique, un composé aliphatique, une huile végétale ou un ester d'huile végétale, à chaque fois individuellement ou en mélange.

6. Dispersion aqueuse selon les revendications 1 à 5, dans laquelle la paroi de capsule est formée par 30 à 100 % en poids d'un ou de plusieurs monomères qui sont un ester alkylique en C₁-C₂₄ de l'acide acrylique, un ester alkylique en C₁-C₂₄ de l'acide méthacrylique, l'acide acrylique, l'acide méthacrylique et l'acide maléique (monomères I),
0 à 20 % en poids d'un ou de plusieurs monomères bi- et/ou polyfonctionnels (monomères II), qui ne sont pas solubles ou qui sont difficilement solubles dans l'eau,
et
0 à 50 % en poids d'un ou de plusieurs autres monomères (monomères III),
à chaque fois par rapport au poids total des monomères.

7. Procédé de fabrication de la dispersion aqueuse selon les revendications 1 à 6, selon lequel
(i) une dispersion brute de microcapsules comprenant les microcapsules selon l'une quelconque des revendications 1 à 6 est préparée, et
(ii) mélangée avec au moins un agent agrochimique.

8. Procédé selon la revendication 7, dans lequel la dispersion brute de microcapsules est fabriquée par chauffage d'une émulsion aqueuse qui comprend des monomères polymérisables par voie radicalaire, un tensioactif lipophile et une huile.

9. Procédé selon la revendication 8, dans lequel l'émulsion aqueuse comprend des monomères polymérisables par voie radicalaire, des démarreurs radicalaires, un colloïde protecteur, un tensioactif lipophile et une huile.

10. Utilisation de la dispersion brute de microcapsules selon la revendication 7 pour la fabrication de la dispersion aqueuse selon les revendications 1 à 6.

11. Procédé de lutte contre une végétation indésirable et/ou de lutte contre une infestation indésirable par des insectes ou des acariens sur des plantes et/ou de lutte contre des champignons phytopathogènes, par traitement de graines de plantes utiles avec la dispersion aqueuse selon l'une quelconque des revendications 1 à 6.

12. Procédé de lutte contre une végétation indésirable et/ou de lutte contre une infestation indésirable par des insectes ou des acariens sur des plantes et/ou de lutte contre des champignons phytopathogènes, par traitement des champignons/insectes, de leur habitat ou des plantes ou du sol à protéger d'une infestation par des champignons ou des insectes, ou des plantes indésirables, du sol sur lequel les plantes indésirables poussent ou de leurs graines avec la dispersion aqueuse selon l'une quelconque des revendications 1 à 6.
